(19) Europäisches Patentamt
European Patent Office
Office européen des brevets

(11) Publication number: **0 137 114 B1**

(12) # EUROPEAN PATENT SPECIFICATION

(45) Date of publication of patent specification: **22.02.89**

(51) Int. Cl.$^4$: **C 08 J 5/12,** C 08 J 7/12, C 09 J 3/16, B 29 C 35/02

(21) Application number: **84107005.5**

(22) Date of filing: **20.06.84**

(54) **Adhering cured polymers or prepolymers to cured elastomer utilizing hypochlorous acid treating agent.**

(30) Priority: **12.09.83 US 531321**

(43) Date of publication of application:
**17.04.85 Bulletin 85/16**

(45) Publication of the grant of the patent:
**22.02.89 Bulletin 89/08**

(84) Designated Contracting States:
**BE DE FR GB IT LU SE**

(58) References cited:
**EP-A-0 025 904**
**US-A-4 300 970**

(73) Proprietor: **THE FIRESTONE TIRE & RUBBER COMPANY**
**1200 Firestone Parkway**
**Akron, Ohio 44317 (US)**

(72) Inventor: **Fieldhouse, John W.**
**2454 Sunnybrook Road**
**Mogadore Ohio 44260 (US)**
Inventor: **Koch, Russell W.**
**2135 Howard Street**
**Hartville Ohio 44632 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 137 114 B1

## Description

This invention relates to a method of bonding cured elastomer and amine cured polymer or prepolymer and the articles produced thereby.

It is especially useful for repairing tires, conveyor belts, hoses, rubber boots or the like or for bonding elastomer layers e.g. in the application of tire treads.

For many years, repairs on cured elastomer have been carried out utilizing gum rubber and curing in a mold under the application of heat. This is messy since gum rubber is not pourable and requires relatively high heat curing conditions (e.g. 164°C (328°F) for 30—45 minutes).

More recently, consideration has been given to use of pourable compositions in the form of amine curable polymer or prepolymer for such repairs. These have the additional advantage of being curable at lower temperatures, e.g. at ambient temperatures thereby allowing repairs in the field. US—A—4,327,138 discloses an ambient temperature cure method which involves chemical treatment of the elastomer surface to be repaired with halogen containing oxidant (N-halosulfonamides, N-halohydantoins, N-haloamides and N-haloimides are mentioned and trichloroisocyanuric acid is used in the specific examples.

EP—A—25 904 describes a process and composition for applying and bonding a curable polymer or prepolymer, for example, an amine curable polymer or prepolymer, at ambient temperatures to the surface of a cured elastomer substrate. The elastomer article or substrate is treated with an organic oxidant such as one selected, for example, from the group consisting of N-halosulfonamides, N-halohydantoins, N-haloamides, N-haloimides, and the various isomers of mono-, di-, and trichlorisocyanuric acid.

US—A—4 300 970 describes a composite composed of vulcanized rubber and thermoplastic resin which adheres tightly to the rubber can be obtained by treating the surface of the vulcanized rubber with at least one of halogen, halogen generating compound and halogenoid, and bonding melted polyamide resin, polyester resin, styrene series resin or acrylic resin to the above treated rubber surface region by the injection or extrusion molding.

It has now been discovered that utilizing hypochlorous acid as the chemical treating agent in the process involving the application of pourable amine curable composition and reduced curing conditions provides the benefit of increased adhesion even with synthetic elastomer substrates or bases.

The invention is directed to a process for bonding cured elastomer and amine cured polymer or prepolymer, said process comprising the steps of

(a) cleaning the portions of the surface of the cured elastomer which is to undergo bonding;

(b) applying a treating agent to that portion;

(c) applying to the treated portion an amine curable polymer or prepolymer and an amine curing agent in polar solvent;

(d) curing the amine curable polymer or prepolymer; whereby the cured polymer or prepolymer is bonded to the elastomer, which is characterized in that the treating agent is hypochlorous acid.

The cured elastomer referred to above comprises those elastomers made from rubber compounds known to those skilled in the art cured by methods known to those skilled in the art.

Such elastomers are selected from the group consisting of polymers or copolymers of conjugated dienes, copolymers prepared from conjugated dienes and vinyl substituted aromatic compounds, butyl rubbers, nitrile rubbers and neoprene.

The conjugated dienes referred to are those having from 4 to 12 carbon atoms. Specific examples of these include butadiene, isoprene, pentadiene, hexadiene, heptadiene, octadiene, 2,3-dimethyl-1,3-butadiene, and 2-methyl-1,3-pentadiene.

The vinyl substituted aromatic compounds referred to are those containing from 8 to 15 carbon atoms. Specific examples of these include styrene, alpha-methylstyrene, 4-t-butylstyrene, vinyl toluene, divinyl benzene, isopropenyl benzene, and diisopropenyl benzene.

Examples of polymers and/or copolymers of conjugated dienes include natural rubber (the elastomeric substance obtained from various trees and plants which generally grow in the tropics or desert portions of the world, which contains in excess of 90% and often in excess of 95% cis-1,4-polyisoprene) and polymers prepared from butadiene and/or isoprene.

Examples of copolymers of conjugated dienes and vinyl substituted aromatic compounds include poly-styrene-butadiene (SBR) poly-alpha-methylstyrene-butadiene, and poly-4-t-butylstyrene-butadiene.

Preferred elastomers for use in the present invention include copolymers of styrene and butadiene (SBR), i.e. styrene-butadiene rubber, and blends of this with up to about 20% of the blend of natural rubber.

Turning now to the processing steps, the step of cleaning the portion of the surface of the cured elastomer which is to undergo bonding constitutes cleaning such portion as by buffing and/or treatment with a conventional organic solvent. Another method of cleaning involves skiving, that is, cutting and removing a portion as for example in the situation where the surface contains an opening.

In the succeeding chemical treatment step the hypochlorous acid is conveniently applied with a suitable solvent, e.g. at a concentration ranging from 0.05 to 1 mole/l to activate the elastomer surface to be bonded. Examples of solvents include lower alkyl acetates (e.g. ethyl acetate, propyl acetate, and butyl acetate) and ethylene glycol diacetate. Apparently the chemical treating agent reacts quantitatively and efficiently with double bonds in the elastomer to produce a reactive substrate (chlorohydrins) which then

reacts with the free isocyanate of the applied polymer or prepolymer thus producing a chemical bond between the elastomer and applied polymer to increase the adhesion between such and produce greater durability (i.e. a longer lasting bond).

The combination of the amine-curable polymer or prepolymer, amine curing agent and polar solvent applied in step (c) form a liquid (pourable) system which is readily applied to the cleaned activated elastomer surface. The admixture of these ingredients is readily accomplished in conventional mixers such as dough mixers, high speed impellers and paddle-type mixers. Small batches can be mixed by stirring with a spatula. Cure of the curable polymer or prepolymer commences upon admixture of the cure system ingredients so the mixing step should not be of a length of time such that any significant cure occurs during mixing. The admixture is readily applied to the portion of the article to be repaired by coating, pouring, casting or molding.

A plasticizer can optionally be included in the admixture to facilitate processing. An optional ingredient can also be included to reduce cure time.

The equivalent weight of the amine curing agent with regard to the curable polymer or prepolymer normally ranges from 85% to 115%, with from 95% to 105% being preferred.

Ordinarily the amount of polar solvent per 100 parts by weight of the curable polymer or prepolymer ranges from 2 to 20, more preferably from 5 to 15.

Preferred amine curable polymers or prepolymers are urethanes, especially polyurethanes. These can be formed by reacting a polyether polyol or a polyester polyol with a molar excess of an organo-diisocyanate to form a prepolymer having terminal isocyanato groups; curing can be carried out to increase the molecular weight from less than about 3,000 upwards to over 10,000 to form polymer. Examples of such polymers are set forth in US—A—2,620,516; 2,777,831; 2,843,568; 2,866,774; 2,900,368; 2,929,800; 2,948,691; 2,948,707; and 3,114,735. Typical specific examples of such polyurethanes include Adiprene L-367®, polytetramethylene ether glycol containing approximately 6.4 percent isocyanate end groups by weight, manufactured by Dupont; Adiprene L-42®, polytetramethylene ether glycol containing approximately 2.8 percent isocyanate end groups by weight, manufactured by DuPont; and Cyanaprene A-7®, a polyester based coating polymer with approximately 2.4 percent isocyanate end groups, manufactured by American Cyanamid. Blends of these polyurethanes are readily utilized.

Other amine curable polymers or prepolymers include the compounds set forth in US—A—3,755,261. Briefly, such compounds are the various epoxy resins such as those disclosed in the "Encyclopedia of Polymer Science and Technology" Interscience Publishers, New York (1967), volume 6, pages 212—221; halogen-containing hydrocarbon polymers such as chloroprene polymers, chlorinated butyl rubber, and chlorinated polyethylene and polypropylene; chlorosulfonated polymers such as those described in US—A—2,723,257; polymers containing acid halide groups such as

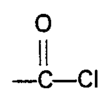

and haloformate groups such as

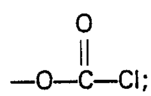

polymers containing anhydride groups which on reaction with diamines yield amine-acide linkages, and organopolysiloxanes as described in US—A—2,938,010.

The amine curing agents can be, for example any of such agents known or useful for such purpose. A multiplicity of such are well known. Preferred ones include a complex of 4,4'-methylene dianiline (MDA) and a salt, or a complex of racemic 2,3-di-(4-aminophenyl) butane and a halide salt, as set forth in US—A—3,755,261. The methods for preparing the complexes are set forth in US—A—3,755,261. A preferred salt utilized with the 4,4'-methylene dianiline compound is sodium chloride or lithium chloride. Due generally to availability and costs, the complexes or salts derived from 4,4'-methylene dianiline are highly preferred. Another class of amine curing agents which are especially useful are the various Versamids, that is the condensation products of polyamides and dibasic acids obtained when certain unsaturated fatty acids are polymerized, and are manufactured by General Mills Chemical Company.

Suitable polar solvents for the admixture are set forth in US—A—3,888,831. Preferred solvents include dimethylformamide, tetrahydrofuran, cyclohexanone, ethyl acetate, nitromethane, nitroethane, nitropropane, and more preferably methyl ethyl ketone and acetone.

Preferred plasticizers include dioctyl-phthalate and tetraethylene glycol bis (2-ethyl hexanoate). MDA-salt (sodium chloride) complex in combination with dioctylphthalate (50% weight basis) is sold under the name Caytur 21. The tetraethylene glycol bis (2-ethyl hexanoate) is marketed by Union Carbide under the name Flexol 4-GO®.

A cure time reducing agent is tributylphosphate used at a level of 0.1% to 10%, more preferably from 0.5% to 5%, based on the total weight of curing agent and tributylphosphate.

Curing is readily carried out at ambient or room temperature, that is, the ordinary prevailing temperatures as from 10°C to 50°C. Often ambient temperatures will range from 15°C to 35°C or 40°C. Curing times at ambient temperature ordinarily range from 12 hours to 72 hours with 16 to 24 hours being preferred. Curing at ambient temperature is ordinarily carried out simply by maintaining the cure composition coated article at such temperature during a period as aforestated.

If desired, curing times can be speeded up by utilizing cure temperatures higher than ambient, e.g. up to 121°C (250°F). At 121°C (250°F) curing is readily carried out in a time period ranging from about one-half to one hour. The disadvantage of this is that this usually requires transporting to a shop while ambient temperature cures are readily carried out in the field.

The process is readily used to repair damaged articles of the cured elastomer, and the amine cured polymer or prepolymer is the repair agent. In such case, the damaged area is cleaned and chemically treated as set forth above. The liquid system of amine-curable polymer or prepolymer and curing agent, is readily poured into or over the damaged area, and curing causes the repair agent to bond to the elastomer. The article repaired in this way resists debonding (delamination) and the use of the hypochlorous acid treating agent increases adhesion and durability of bonding compared to the specific examples in the aforementioned US—A—4,327,138. The bond has good adhesion characteristics even at elevated temperatures.

The process is also readily used to bond layers of cured elastomer. In this case, the portions of the layers that are to be joined are cleaned and chemically treated as set forth above, the liquid system of polymer and curing agent etc. is applied (e.g. poured or brushed on) to at least one cleaned activated layer and the layers are brought together and curing is carried out whereby the layers are bonded together. The bond has good durability and good adhesion characteristics even at elevated temperature.

The invention is illustrated in the following specific examples:

Example I

Each test specimen was a peel adhesion pad of styrene/butadiene rubber (2.54 mm) (100 gauge) reinforced with nylon cord. Each pad was treated as follows: the surface was buffed with a wire brush to a RMA-1 buff rating, then washed with acetone or ethyl acetate on Rymplecloth and then allowed to dry thoroughly. The pad was then primed with the appropriate primer solution as specified. The clean, primed surface was coated with a formulation of 300 parts Adiprene L-42® [toluene diisocyanate capped poly(oxytetramethylene) diol, 2.7% free NCO, duPont Chemical Co] 30 parts acetone, 20 parts Flexol 4GO® (triethyleneglycol di-2-ethylhexanoate, Union Carbide) and 43 parts Caytur 21® (complex of 3 moles of 4,4'-methylene bis(dianiline) and 1 mole sodium chloride in dioctylphthalate plasticizer, duPont Chemical Co.). A nylon reinforcing mesh is placed in the coating for stabilization and the coating is kept slightly apart from the pad at one end. The coated pad is cured for 1 hour at 121°C (250°F). The coating was bonded well to the rubber pad except for the end that was kept apart. Each pad was cut into 2.54 cm (one inch) strips and each strip was subjected to pulling at the split end utilizing an Instron Tester to measure in N/m (pounds per linear inch (p.l.i.)) the force required to pull the coating away from the rubber pad. For each pad, two strips were tested at room temperature, and two strips were tested at 100°C (212°F). A difference of 5.4—8.1 N/m (10—15 p.l.i.) on the Instron Tester results indicates a difference in an actual repair situation.

Testing was carried out utilizing as primer solutions (i.e. solutions of chemical treating agent) hypochlorous acid in ethyl acetate at a concentration of 0.9 meq/ml (Run 1) and hypochlorous acid in butyl acetate at a concentration of 0.7 meq/ml (Run 2) and 5% by weight trichlorocyanuric acid (Trichloro-s-triazinetrione) in ethyl acetate (Run 3—representing the prior art).

Test results were as follows:

| | Peel adhesion data N/m (p.l.i.) | |
|---|---|---|
| | Room temperature | 100°C (212°F) |
| Run 1 | 19.4 (36) | 17.3 (32) |
| | 27.0 (50) | 18.9 (35) |
| Run 2 | 68.0 (126) | 27.0 (50) |
| | 32.4 (60) | 25.9 (48) |
| Run 3 | 19.4 (36) | 5.4 (10) |
| | 18.4 (34) | 6.5 (12) |

As indicated above by comparison of Runs 1, 2 and 3, the invention (Runs 1 and 2) provides significant elevated temperature adhesion advantages over the use of the primer described in US—A—4,327,138 (i.e. trichloroisocyanuric acid (Run 3) and the invention run where butyl acetate is used as solvent for the primer (Run 2) provides significant adhesion advantages both at room temperature and elevated temperature compared to the primer described in US—A—4,327,138 of trichloroisocyanuric acid.

Example II

This example was carried out the same as Example I except that the primer solvent was ethylene glycol diacetate and curing was carried out for 24 hours at room temperature. Two runs were carried out. Run 1 (within the scope of the invention) involved using approximately 0.13 meq/ml hypochlorous acid in ethylene glycol diacetate for the chemical treatment step and Run 2 (representing use of the primer described in US—A—4,327,138) involved using 3 weight% trichloroisocyanuric acid in ethylene glycol diacetate for the chemical treatment step.

Test results were as follows:

| | Peel adhesion data N/m (p.l.i.) | |
|---|---|---|
| | Room Temperature | 100°C (212°F) |
| Run 1 | 54.0+ (100+) | 16.2 (30) |
| | 54.0+ (100+) | 16.2 (30) |
| Run 2 | 8.6 (16) | 8.6 (16) |
| | 16.2 (30) | 15.1 (28) |

As indicated above the run within the scope of the invention (Run 1) showed much superior adhesion results at room temperature.

Similar results of improved bonding are obtained when the elastomer was 95% SBR and 5% natural rubber.

Results of improved bonding are also obtained when peel adhesion pads of other elastomers (e.g. 100% natural rubber or butyl rubber or neoprene or nitrile rubbers) are utilized.

Good results are also obtained when other primer solvents, e.g. 1,2-dichloroethane, are utilized.

**Claims**

1. A process for bonding cured elastomer and amine cured polymer or prepolymer, said process comprising the steps of

(a) cleaning the portions of the surface of the cured elastomer which is to undergo bonding;

(b) applying a treating agent to that portion;

(c) applying to the treated portion an amine curable polymer or prepolymer and an amine curing agent in polar solvent;

(d) curing the amine curable polymer or prepolymer; whereby the cured polymer or prepolymer is bonded to the elastomer,

characterized in that the treating agent is hypochlorous acid.

2. A process as recited in Claim 1, wherein the amine curable polymer or prepolymer is polyurethane.

3. A process as recited in Claim 2, wherein the hypochlorous acid is applied as a solution in which the solvent is ethyl acetate, propyl acetate, butyl acetate and/or ethylene glycol diacetate.

4. A process as recited in Claim 3, wherein the hypochlorous acid is dissolved in bytyl acetate.

5. A process as recited in Claim 4, wherein the amine curing agent comprises 4,4'-methylene dianiline and the polar solvent is acetone.

6. A process as recited in Claim 5, wherein the cured elastomer is styrene butadiene rubber or blends thereof with up to about 20% by weight of the blend of natural rubber.

7. A process as recited in Claim 6, wherein the process is for repairing damaged articles of cured elastomer and the amine cured polymer or prepolymer is the repair agent.

8. A process as recited in Claim 1 for bonding layers of cured elastomer, comprising the steps of

(a) cleaning the portion of each layer which is to undergo bonding;

(b) applying hypochlorous acid to said portions;

(c) applying to the hypochlorous acid treated portion of at least one layer an amine curable polymer or prepolymer and an amine curing agent in polar solvent;

(d) bringing together the portions to be joined;

(e) curing the amine curable polymer or prepolymer; whereby said layers are bonded to each other by the amine cured polymer or prepolymer.

9. A process as recited in Claim 8, wherein the amine curable polymer or prepolymer is polyurethane.

10. A process as recited in Claim 8, wherein the hypochlorous acid is applied as a solution in which the solvent is ethyl acetate, propyl acetate, butyl acetate and/or ethylene glycol diacetate.

11. A process as recited in Claim 10, wherein the hypochlorous acid is dissolved in butyl acetate.

12. A process as recited in Claim 11, wherein the amine curing agent comprises 4,4'-methylene dianiline and the polar solvent is acetone.

13. A process as recited in Claim 12, wherein the cured elastomer is styrene butadiene rubber or blends thereof with up to about 20% by weight of the blend of natural rubber.

**Patentansprüche**

1. Verfahren zum Verbinden eines gehärteten bzw. vulkanisierten Elastomeren mit einem amingehärteten Polymeren oder Präpolymeren, umfassend die Stufen
(a) Reinigen der zu verbindenden Teile der Oberfläche des gehärteten bzw. vulkanisierten Elastomeren;
(b) Aufbringen eines Behandlungsmittels auf diesen Teil;
(c) Aufbringen eines aminhärtbaren Polymeren oder Präpolymeren und eines Aminhärters in einem polaren Lösungsmittel auf den behandelten Teil;
(d) Härten des aminhärtbaren Polymeren oder Präpolymeren, wobei das gehärtete Polymere oder Präpolymere an das Elastomere gebunden wird,
dadurch gekennzeichnet, daß das Behandlungsmittel unterchlorige Säure ist.

2. Verfahren nach Anspruch 1, dadurch gekennzeichnet, daß das aminhärtbare Polymere oder Präpolymere Polyurethan ist.

3. Verfahren ach Anspruch 2, dadurch gekennzeichnet, daß die unterchlorige Säure als Lösung aufgebracht wird, wobei das Lösungsmittel Ethylacetat, Propylacetat, Butylacetat und/oder Ethylenglykolidiacetat ist.

4. Verfahren nach Anspruch 3, dadurch gekennzeichnet, daß die unterchlorige Säure in Butylacetat aufgelöst ist.

5. Verfahren nach Anspruch 4, dadurch gekennzeichnet, daß der Aminhärter 4,4'-Methylendianilin ist und daß das polare Lösungsmittel Aceton ist.

6. Verfahren nach Anspruch 5, dadurch gekennzeichnet, daß das gehärtete bzw. vulkanisierte Elastomere Styrol-Butadien-Kautschuk oder Gemische davon mit bis zu etwa 20 Gew.-% des Gemisches von Naturkautschuk ist.

7. Verfahren nach Anspruch 6, dadurch gekennzeichnet, daß das Verfahren für die Reparatur von beschädigten Gegenständen von gehärtetem bzw. vulkanisiertem Elastomeren bestimmt ist und daß das gehärtet Polymere oder Präpolymere das Reparaturmittel ist.

8. Verfahren nach Anspruch 1 zum Verbinden von Schichten von gehärtetem bzw. vulkanisiertem Elastomeren, dadurch gekennzeichnet, daß es die Stufen
(a) Reinigen des zu verbindenden Teils jeder Schicht;
(b) Aufbringen von unterchloriger Säure auf die genannten Teile;
(c) Aufbringen eines aminhärtbaren Polymeren oder Präpolymeren und eines Aminhärters in einem polaren Lösungsmittel auf den mit unterchloriger Säure behandelten Teil mindestens einer Schicht;
(d) Zusammenbringen der zu verbindenden Teile;
(e) Härten des aminhärtbaren Polymeren oder Präpolymeren;
umfaßt, wobei die genannten Schichten miteinander durch das amingehärtete Polymere oder Präpolymere verbunden werden.

9. Verfahren nach Anspruch 8, dadurch gekennzeichnet, daß das aminhärtbare Polymere oder Präpolymere Polyurethan ist.

10. Verfahren nach Anspruch 8, dadurch gekennzeichnet, daß die unterchlorige Säure als Lösung aufgebracht wird, wobei das Lösungsmittel Ethylacetat, Propylacetat, Butylacetat und/oder Ethylenglykoldiacetat ist.

11. Verfahren nach Anspruch 10, dadurch gekennzeichnet, daß die unterchlorige Säure in Butylacetat aufgelöst ist.

12. Verfahren nach Anspruch 11, dadurch gekennzeichnet, daß der Aminhärter 4,4-Methylendianilin ist und daß das polare Lösungsmittel Aceton ist.

13. Verfahren nach Anspruch 12, dadurch gekennzeichnet, daß das gehärtete bzw. vulkanisierte Elastomere Styrol-Butadien-Kautschuk oder Gemische davon mit bis zu etwa 20 Gew.-% des Gemisches von Naturkautschuk ist.

**Revendications**

1. Procédé pour lier un élastomère rèticulé à un polymère ou prépolymère réticulé avec une amine, ledit procédé comprenant les étapes consistant:
(a) à nettoyer la partie de la surface de l'élastomère réticulé qui doit être exposée à une liaison;
(b) à appliquer un agent de traitement à cette partie;
(c) à appliquer à la partie traitée un polymère ou prépolymère réticulable avec une amine et un agent aminé de réticulation dans un solvant polaire;
(d) à accomplir la réticulation du polymère ou prépolymère réticulable avec une amine; ce qui provoque la liaison du polymère ou prépolymère réticulé à l'élastomère, caractérisé en ce que l'agent de traitement est l'acide hypochloreux.

2. Procédé suivant la revendication 1, dans lequel le polymère ou prépolymère réticulable avec une amine est un polyuréthanne.

3. Procédé suivant la revendication 2, dans lequel l'acide hypochloreux est appliqué sous forme d'une

solution dans laquelle le solvant est l'acétate d'éthyle, l'acétate de propyle, l'acétate de butyle et/ou le diacétate d'éthylèneglycol.

4. Procédé suivant la revendication 3, dans lequel l'acide hypochloreux est dissous dans l'acétate de butyle.

5. Procédé suivant la revendication 4, dans lequel l'agent aminé de réticulation consiste en 4,4'-méthylènedianiline et le solvant polaire est l'acétone.

6. Procédé suivant la revendication 5, dans lequel l'élastomère réticulé est un caoutchouc styrènebutadiène ou des mélanges de ce caoutchouc avec jusqu'à environ 20%, en poids du mélange, de caoutchouc naturel.

7. Procédé suivant la revendication 6, dont la mise en oeuvre est destinée à la réparation d'articles endommagés formés d'un élastomère réticulé, le polymère ou prépolymère réticulé avec une amine constituant l'agent de réparation.

8. Procédé suivant la revendication 1 pour la liaison de couches d'élastomère réticulé, qui comprend les étapes consistant.

(a) à nettoyer la partie de chaque couche qui doit être exposée à une liaison;

(b) à appliquer de l'acide hypochloreux à ladite partie;

(c) à appliquer à la partie, traitée avec l'acide hypochloreux, d'au moins une couche, un polymère ou prépolymère réticulable avec une amine et un agent aminé de réticulation dans un solvant polaire;

(d) à mettre en contact les parties à joindre;

(e) à accomplir la réticulation du polymère ou prépolymère réticulable avec une amine; ce qui provoque la liaison l'une à l'autre des couches par le polymère ou prépolymère réticulé avec une amine.

9. Procédé suivant la revendication 8, dans lequel le polymère ou prépolymère réticulable avec une amine est un polyuréthanne.

10. Procédé suivant la revendication 8, dans lequel l'acide hypochloreux est appliqué sous forme d'une solution dans laquelle le solvant est l'acétate d'éthyle, l'acétate de propyle, l'acétate de butyle et/ou le diacétate d'éthylèneglycol.

11. Procédé suivant la revendication 10, dans lequel l'acide hypochloreux est dissous dans l'acétate de butyle.

12. Procédé suivant la revendication 11, dans lequel l'agent aminé de réticulation consiste en 4,4'-méthylènedianiline et le solvant polaire est l'acétone.

13. Procédé suivant la revendication 12, dans lequel l'élastomère réticulé est un caoutchouc styrènebutadiène ou des mélanges de ce caoutchouc avec jusqu'à environ 20%, en poids du mélange, de caoutchouc naturel.